# EUROPÄISCHE PATENTSCHRIFT

(11) **EP 2 182 249 B1**
(45) Veröffentlichungstag und Bekanntmachung des Hinweises auf die Patenterteilung: **07.12.2011**
(21) Anmeldenummer: 09013620.1
(22) Anmeldetag: 29.10.2009
(51) Int. Cl.: F16H 21/44, B25B 5/14

(54) **Getriebe**
Gearbox
Engrenage

(30) Priorität: 30.10.2008 DE 102008054049
(43) Veröffentlichungstag der Anmeldung: 05.05.2010
(73) Patentinhaber: Hellkuhl, Ludger, 33332 Gütersloh (DE)
(72) Erfinder: Hellkuhl, Ludger, 33332 Gütersloh (DE)
(74) Vertreter: Wiebusch, Manfred

(56) Entgegenhaltungen:
- WO-A1-2005/075801
- DE-A1- 2 804 715
- GB-A- 1 289 924

## Beschreibung

Die Erfindung betrifft ein Getriebe zur Übertragung geradliniger Kräfte.

Für die Übertragung von Rotationsbewegungen zwischen zwei unter einem Winkel zueinander angeordneten Wellen sind viele Getriebebauformen bekannt, beispielsweise Winkelgetriebe mit Kegelrädern.

US 2 047 061 beschreibt einen Mechanismus zur Betätigung eines Ventils, bei dem eine Wippe auf einer Führungskontur abrollt. Der Mechanismus erlaubt die Übertragung von Druckkräften. Die Wippe und die Führungskontur sind mit ineinandergreifenden Zähnen versehen. Die Radien der Wippe und der Führungskontur stehen im Verhältnis 1 : 2. Die Wippe wird mittels einer Schubstange, die gegen einen Sitz drückt, so angetrieben, daß an ihrem gegenüberliegenden Ende ein Druck auf einen Kolben des Ventils ausgeübt wird. Eine Gegenbewegung erfolgt, indem eine Druckfeder am Ventil den Kolben gegen diese drückt. Die Wippe wird von einer Blattfeder gegen die Führungskontur gedrückt.

DE 2 804 715 A1 beschreibt eine Steuerung zur Betätigung eines Ventils in einem Zylinderkopf. Eine Stange zur Bewegung des Ventils ist an einem Hebel angelenkt, der sich mit einer mit einem Wälzradius r gewölbten Hebelstützfläche auf einer Abwälzfläche mit doppelt so großem Radius abwälzt. Zwischen der Hebelstützfläche und der Abwälzfläche sind Verzahnungen vorgesehen. Die Bewegung des Hebels wird von einem Servoantrieb mit Hilfe einer weiteren Stange gesteuert, deren Ende am Hebel angelenkt ist. Der Servoantrieb kann eine hin- und hergehende Bewegung der Stange ausführen. Auf der gegenüberliegenden Seite ist die das Ventil betätigende Stange durch eine Druckfeder nach unten vorgespannt. Aufgrund des Radienverhältnisses der Hebelstützfläche und der Abwälzfläche bewegen sich die auf dem Teilkreis der Verzahnung liegenden Gelenkpunkte der Stangen am Hebel jeweils geradlinig.

Aufgabe der Erfindung ist es, ein Getriebe zur Verfügung zu stellen, welches sich zur Übertragung geradliniger Kräfte einer Hin- und Herbewegung besonders gut eignet.

Diese Aufgabe wird erfindungsgemäß durch ein Getriebe nach Anspruch 1 gelöst.

Wenn hier und im folgenden von einem Punkt, etwa dem Führungspunkt, Gelenkpunkt oder getriebefestem Punkt die Rede ist, ist stets ein Punkt bei Betrachtung in der Ebene der Wippbewegung gemeint. In gleicher Weise beziehen sich geometrische Angaben zu Abständen, Kreisradien oder dergleichen auf eine Betrachtung in der Ebene der Wippbewegung, und die jeweiligen Kreisbögen verlaufen parallel zu dieser Ebene.

Aufgrund der Zwangsführung vermag die Wippe eine begrenzte Wippbewegung in der genannten Ebene auszuführen. Die Zwangsführung der Wippe ist dabei so gestaltet, daß nicht nur der Führungspunkt der Wippe einen konstanten Abstand von dem getriebefesten Punkt einhält, sondern auch der erste Gelenkpunkt eine geradlinige Hin- und Herbewegung in der oder parallel zu der Ebene ausführt. Verschiedene konstruktive Varianten zur Bewirkung dieser Zwangsführung werden weiter unten beschrieben.

Das Getriebe ermöglichst es somit, eine Kraftübertragung zwischen der Wippbewegung der Wippe und der geradlinigen Hin- und Herbewegung des Gelenkpunktes, an dem die Schubstange angekoppelt ist, zu bewirken.

Bei dem zweiten Antriebs- oder Abtriebselement kann es sich beispielsweise um eine weitere Schubstange handeln, die ebenfalls an einem Gelenkpunkt mit der Wippe verbunden ist, der eine geradlinige Hin- und Herbewegung ausführt. Die Schubstange ist beispielsweise ein Pleuel. Dadurch ist eine Übertragung von Kräften zwischen geradlinigen Hin- und Herbewegungen der Schubstangen in jeweiligen Richtungen möglich, die unter einem Winkel zueinander stehen.

Bevorzugte Ausführungsformen der Erfindung ergeben sich aus den Unteransprüchen.

Vorzugsweise bildet eine zweite Schubstange ein zweites Antriebs- oder Abtriebselemente, welche zweite Schubstange an einem zweiten, von dem ersten Gelenkpunkt verschiedenen Gelenkpunkt mit der Wippe verbunden ist, der bei der Wippbewegung der Wippe eine geradlinige Hin und Herbewegung parallel zu der genannten Ebene ausführt. Beispielsweise dient die erste Schubstange als Antriebselement oder Antrieb, während die zweite Schubstange als Abtriebselemente oder Abtrieb dient. Das Getriebe ist beispielsweise für einen wählbaren Winkel zwischen der Richtung der geradlinigen Hin- und Herbewegung der ersten Schubstange und der Richtung der geradlinigen Hin- und Herbewegung der zweiten Schubstange ausgelegt. Dieser Winkel liegt beispielsweise im Bereich von 0 bis kleiner 180°. Der antriebsseitige Übertragungswinkel ist vorzugsweise größer als 30°, jedoch kleiner als 180°. Vorzugsweise liegen die ersten und zweiten Gelenkpunkte auf unterschiedlichen Seiten des Führungspunktes der Wippe. Beispielsweise liegen bei einem Winkel von 90° die ersten und zweiten Gelenkpunkte auf einer Linie mit dem Führungspunkt. Vorzugsweise haben der erste und der zweite Gelenkpunkt jeweils in der Ebene der Wippbewegung denselben Abstand von dem Führungspunkt.

Es sind verschiedene Antriebsarten in das Getriebe integrierbar. Als Beispiele seien aufgeführt: eine Gewindespindel mit Handrad oder Motor, eine Zahnstange mit Handrad oder Motor, ein Hydraulik- oder Druckluftzylinder, ein Kurbeltrieb oder eine Kurbelschleife, usw.

Gemäβ einer ersten Alternative im Anspruch 1 ist die Wippe mittels eines Lenkers zwangsgeführt, wobei der Lenker um den Führungspunkt schwenkbar ist und um eine durch den getriebefesten Punkt gehenden Achse schwenkbar ist. Beispielsweise verbindet der Lenker den Führungspunkt mit dem genannten getriebefesten Punkt. Insbesondere ist die Wippe gelenkig mit dem Lenker verbunden. Beispielsweise ist der Lenker drehbar um den getriebefesten Punkt gelagert. Bei der Wippbewegung der Wippe führt der Lenker in der Ebene der Wippbewegung eine Schwenkbewegung um den getriebefesten Punkt aus. Der Lenker bietet eine einfache, robuste und platzsparende Möglichkeit, um den Führungspunkt der Wippe auf einem Kreisbogen um den getriebefesten Punkt zwangszuführen.

Gemäβ Anspruch 3 bildet der Lenker eine Kurbel mit einer Kurbelschwinge, deren Achse durch den getriebefesten Punkt geht und senkrecht zur genannten Ebene angeordnet ist. Die Kurbelschwinge kann sowohl als Antrieb oder als Abtrieb wirken. Mit einem derartigen Getriebe kann eine Kraftübertragung zwischen geradlinig oszillierenden Zug- und Druckkräften und oszillierenden Drehmomenten erfolgen. Ein Antrieb über die Schubstange kann wie bei der oben beschriebenen Ausführungsform mit zwei Schubstangen erfolgen. Als Antrieb über die Kurbelschwinge sind beispielsweise zu nennen: ein Dreistabgetriebe mit umlaufender Kurbel, Koppel und Schwinge, ein Antrieb über Taumelscheiben und ein Drehzylinder.

Bei dem erfindungsgemäßen Getriebe ist das Übersetzungsverhältnis nicht konstant, so daß einerseits eine Selbsthemmung und andererseits eine Kniehebelwirkung erreicht werden kann.

Gemäβ einer zweiten Alternative im Anspruch 1 ist die Wippe mittels eines Rollelements, beispielsweise einer Rolle, geführt, welches Rollelement drehbar um eine durch den Führungspunkt gehende Achse an der Wippe gelagert ist und an einer Führungskulisse vor dem genannten getriebefesten Punkt abrollt. Dadurch wird sichergestellt, daß in der Ebene der Wippbewegung der Abstand zwischen dem Führungspunkt und dem getriebefesten Punkt einen vorgegebenen Abstand nicht unterschreitet. Insbesondere kann während der Abrollbewegung der Führungspunkt der Wippe in der Ebene der Wippbewegung einen konstanten Abstand von dem getriebefesten Punkt einhalten.

Die Wippe weist eine kreisabschnittsförmige konvexe Außenkontur mit einem Radius R auf, mittels derer sie in einer konkaven Führungskontur geführt ist, die kreisabschnittsförmig mit einem Radius 2R ist. Die Wippe wippt mit ihrer Außenkontur mit dem Radius R auf einem Bogen mit dem Radius 2R hin und her (Wippbewegung). Durch die Zwangsführung der Wippe wird verhindert, daß die Wippe, beispielsweise bei Lastwechseln, von der Führungskontur abhebt.

Die Außenkontur der Wippe und die Führungskontur weisen jeweils Zähne auf, die ineinandergreifen. Die Verzahnung der Außenkontur der Wippe mit der Führungskontur verhindert, daß die Wippe entlang der Führungskontur rutscht. Dadurch Führt jeder Punkt, der auf einem Kreisbogen mit Radius R entsprechend der Außenkontur der Wippe liegt, bei der Wippbewegung zwangsläufig eine geradlinige Hin- und Herbewegung auf einer Linie aus, die, bei Betrachtung projiziert in die Ebene der Wippbewegung, den Mittelpunkt des der Führungskontur entsprechenden Kreisbogens mit Radius 2R schneidet. Insbesondere findet so eine Übertragung zwischen der Schwingbewegung der Wippe und der geradlinigen Hin- und Herbewegung des Gelenkpunktes statt.

Vorzugsweise ist das Getriebe in einem flachen Gehäuse angeordnet, aus dem die Schubstange(n) und gegebenenfalls die Kurbelschwinge hinausragen.

Die Erfindung ermöglicht es, geradlinig gerichtete Zug- und Druckkräfte ausschließlich durch überlagerte Roll- und Drehbewegungen umzulenken. Indem die Schubstangen unmittelbar nach radial außerhalb aus dem Kreisabschnitt der äußeren Führungskontur mit Radius 2R herausgeführt sind, ergibt sich ein sehr kompakter Aufbau. Zugleich wird ein relativ großer Hub ermöglicht, sowie eine Übertragung großer Kräfte. Durch die günstige Lastverteilung an den beweglichen Elementen kann insbesondere die Wippe kostengünstig z.B. aus Kunststoff hergestellt sein.

Bevorzugte Ausführungsbeispiele der Erfindung werden im folgenden anhand der Zeichnungen näher erläutert. Es zeigen:
- Fig. 1: eine schematische Darstellung eines erfindungsgemäßen Ge- triebes mit zwei Schubstangen;
- Fig. 2: eine schematische Darstellung einer weiteren Ausführungs- form;
- Fig. 3: eine schematische Darstellung einer weiteren Ausführungs- form;
- Fig. 4: eine schematische Darstellung einer Ausführungsform mit ei- ner Kurbelschwinge; und
- Fig. 5: eine schematische Darstellung einer Spannvorrichtung mit vier Getrieben gemäß Fig. 1.

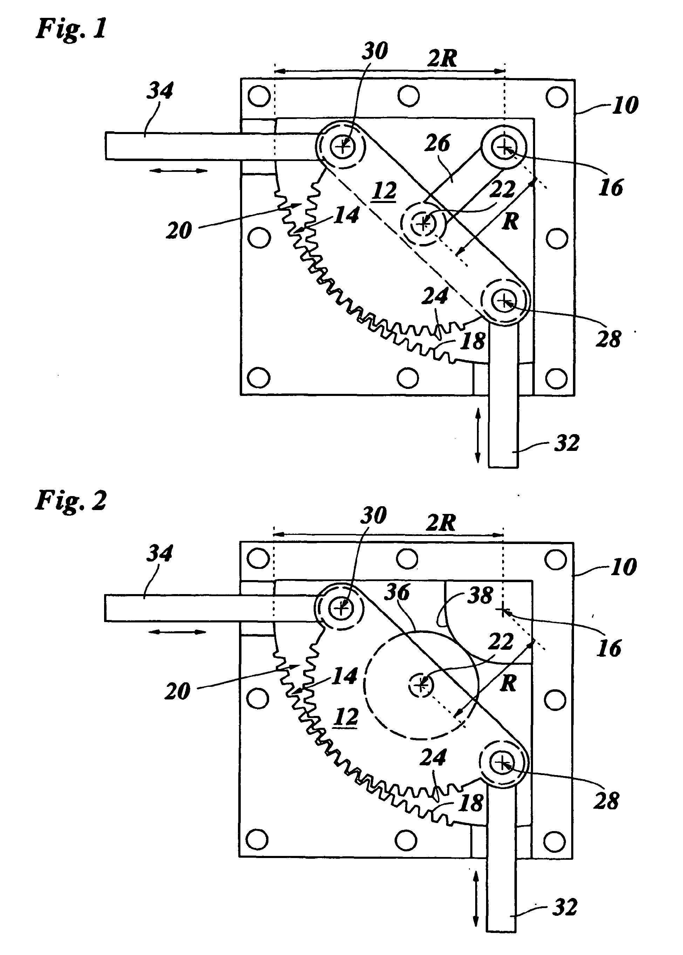

Das in Fig. 1 gezeigte Getriebe hat ein Gehäuse 10, von dem in Fig. 1 eine Halbschale dargestellt ist. In dem Gehäuse 10 ist eine Wippe 12 aufgenommen, die eine Wippbewegung in einer der Zeichenebene entsprechenden Ebene ausführen kann.

An einer Innenseite an der Wand des Gehäuses 10 bildet das Gehäuse eine konkave Führungskontur 14, die entlang eines Kreisbogens mit dem Radius 2R um einen getriebefesten Punkt 16 verläuft und im gezeigten Beispiel annähernd einem Viertelkreis entspricht. Ein Bereich der Führungskontur 14 ist mit Zähnen 18 versehen.

Die Wippe 12 hat eine konvexe, kreisbogenförmige Außenkontur 20, die mit einem Radius R um einen Führungspunkt 22 der Wippe verläuft. Die Außenkontur 20 entspricht annähernd einem Halbkreis und ist mit Zähnen 24 versehen, mittels derer die Wippe 12 mit der Führungskontur 14 verzahnt ist. Somit muss die Wippe 12 auf der Führungskontur 14 abrollen.

Um ein Abheben der Wippe 12 von der Führungskontur 14 zu verhindern, ist die Wippe an dem Führungspunkt 22 gelenkig mit einem Lenker 26 verbunden, der wiederum an dem getriebefesten Punkt 16 gelenkig mit dem Gehäuse 10 verbunden ist. Der Abstand zwischen dem Punkt 16 und dem Führungspunkt 22 beträgt R. Es wird somit eine Zwangsführung des Führungspunktes 22 auf einem Kreisbogen mit dem Radius R um den getriebefesten Punkt 16 bewirkt.

Beim Abrollen der Wippe 12 auf der Führungskontur 14 (Wippbewegung) führen erste und zweite Gelenkpunkte 28. 30 der Wippe 12, die in Abstand R vom Führungspunkt 22 angeordnet sind, geradlinige Hin- und Herbewegungen in Richtung auf den getriebefesten Punkt 16 und von diesem weg aus. Der Lenker 26 und die Verzahnung erzwingen die Geradführung der Gelenkpunkte 28, 30.

An den Gelenkpunkten 28 und 30 ist jeweils eine Schubstange 32, 34 gelenkig mit der Wippe verbunden. Beispielsweise wirkt die erste Schubstange 32 als Antrieb, indem sie in einer durch einen Doppelpfeil gekennzeichneten Richtung parallel zu ihrer Längsrichtung hin und her bewegt wird. Durch die dadurch verursachte Wippbewegung wird eine Kraft auf die zweite Schubstange 34 übertragen, die ihrerseits eine Bewegung in ihrer Längsrichtung ausführt. Im gezeigten Beispiel beträgt der Winkel zwischen den beiden Bewegungsrichtungen 90°.

Da die gradlinige Bewegung der Gelenkpunkte 28 und 30 bereits durch die Zwangsführung der Wippbewegung vorgegeben sind, ist keine Führung der Schubstangen am Gehäuse 10 erforderlich. Die Schubstangen sind beispielsweise lose durch das Gehäuse 10 nach außen geführt. Die Öffnungen sind beispielsweise mit einem Balg verschlossen. Aufgrund der Zwangsführung der Wippe treten an der Abtriebsseite keine Querkräfte auf. Ebenso werden erhebliche Fluchttoleranzen der Schubstangen vom Getriebe toleriert. Die Schubstangen können daher beispielsweise Pleuelstangen eines Kurbeltriebs sein. Eine Querdrehung der Wippe 12 aus der Zeichenebene in Fig. 1 heraus wird beispielsweise durch eine flächige Führung, beispielsweise eine flächige Gleitführung der Wippe 12 an einer Grundfläche des Gehäuses 10 verhindert. Somit ist das Getriebe auch unempfindlich gegenüber Querkräften, die quer Zeichenebene in Fig. 1 auftreten.

Vorteilhaft ist insbesondere, dass der Lenker 26 den in einer Richtung zwischen Gelenkpunkt 28 und getriebefestem Punkt 16 gerichteten Anteil der über die Schubstange 32 übertragenen Zug- und Druckkräfte aufnimmt und überträgt. Entsprechendes gilt für die Schubstange 34 und die Richtung zwischen dem Gelenkpunkt 30 und dem getriebefesten Punkt 16. Die Zähne der Wippe und Führungskontur übertragen lediglich den beispielsweise aus einem Versatz der Schubstangen resultierenden Anteil der Zug- und Druckkräfte, etwa bei einer Richtung der Kraft schräg zur Richtung zwischen Gelenkpunkt 28 und getriebefestem Punkt 16. Der Lenker verringert daher die Belastung der Zähne erheblich. Je nach Anwendung können daher das Spiel zwischen den Zähnen von Wippe und Führungskontur sowie die Stärke der Zähne angepasst werden.

Am Rand des Gehäuses 10 sind Bohrungen dargestellt, mit denen das Gehäuse 10 verschlossen werden kann und das Getriebe in einer Maschine befestigt werden kann.

Fig. 2 zeigt eine modifizierte Ausführungsform des Getriebes aus Fig. 1. Die Zwangsführung des Führungspunktes 22 um den getriebefesten Punkt 16 wird hier jedoch nicht durch einen Lenker 26 bewirkt. Vielmehr ist an dem Führungspunkt 22 eine Rolle 36 drehbar an der Wippe 12 gelagert, welche Rolle z.B. den Radius 1/2 R hat. Die Rolle 36 rollt an einer konvexen Führungskulisse 38 mit z.B. dem Radius 1/2 R um den getriebefesten Punkt 16 ab. Auf diese Weise wird ebenfalls gewährleistet, daß die Wippe 12 nicht von der gegenüberliegenden Führungskontur 14 abhebt. Im übrigen entspricht der Aufbau und die Funktionsweise des Getriebes aus Fig. 2 dem Getriebe aus Fig. 1.

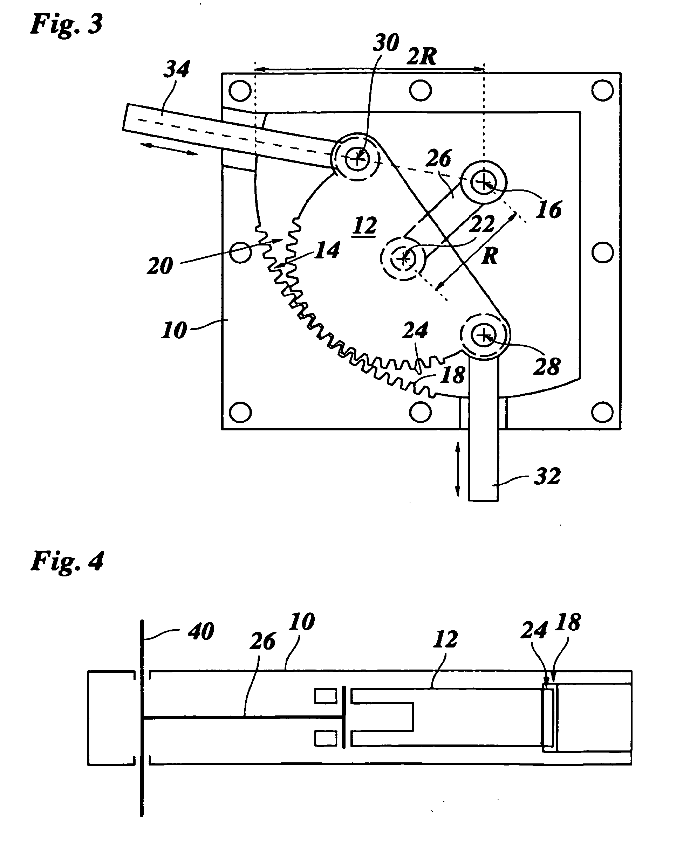

Fig. 3 zeigt eine Ausführungsform des Getriebes, die gegenüber der Ausführungsform aus Fig. 1 insoweit abgewandelt ist, als in Fig. 3 die Richtungen der Hin- und Herbewegungen der Schubstangen 32. 34 unter einem Winkel größer als 90° zueinander liegen. Die Umfangslängen der Führungskontur 14 und der Außenkontur 20 der Wippe 12 sind entsprechend verlängert. Während in Fig. 1 der Führungspunkt 22 auf der Verbindungslinie der Gelenkpunkte 28 und 30 liegt, ist dies in Fig. 3 nicht der Fall. Die Funktionsweise des Getriebes entspricht im übrigen dem Getriebe nach Fig. 1. Insbesondere findet die jeweilige Hin- und Herbewegung des ersten oder zweiten Gelenkpunktes 28, 30 auf einer Linie statt, die durch den getriebefesten Punkt 16 geht.

In entsprechender Weise sind abgewandelte Ausführungsformen denkbar, bei denen die Kraftübertragungswinkel zwischen den Schubstangen 32, 34 kleiner als 90° sind, vorzugsweise jedoch größer 30°.

Fig. 4 ist eine Skizze, die eine weitere Abwandlung des Getriebes aus Fig. 1 zeigt. Die Ansicht in Fig. 4 entspricht einer Ansicht in Fig. 1 von links. Die Figur zeigt das Gehäuse 10, die Führungskontur 14 und die Außenkontur 20 der Wippe 12 im Querschnitt. Der Lenker 26 hat bei diesem Ausführungsbeispiel die Funktion einer Kurbel und ist mit einer Kurbelschwinge 40 verbunden, deren Achse durch den getriebefesten Punkt 16 geht.

Dieses Getriebe ermöglicht eine Übertragung zwischen einer pendelnd oszillierenden Drehbewegung der Kurbelschwinge 40 und einer gradlinig oszillierenden Hin- und Herbewegung einer oder mehrerer Schubstangen 32, 34. Dabei kann die Kurbelschwinge 40 sowohl Antriebs- als auch Abtriebselement sein. Vorzugsweise sind bei den oben beschriebenen Ausführungsformen der Erfindung jeweils geeignete Anschläge für bewegliche Teile, beispielsweise die Wippe 12, vorgesehen, um die Wippbewegung zu begrenzen. Beispielsweise kann ein geeigneter Anschlag sicherstellen, daß der Führungspunkt 22 nicht auf einer Linie zwischen dem getriebefesten Punkt 16 und dem antriebsseitigen Gelenkpunkt 28 gerät.

Die beschriebenen Getriebe können in vielfältiger Art und Weise eingesetzt und miteinander kombiniert werden.

Die dargestellten Ausführungen sind lediglich beispielhaft aufgeführt. So können beispielsweise mehr als eine Schubstange an einem Gelenkpunkt vorgesehen sein, und die Merkmale der Ausführungsbeispiele können beliebig miteinander kombiniert werden. Beispielsweise kann bei dem Getriebe nach Fig. 1 zusätzlich die Kurbelschwinge nach Fig. 4 am Lenker 26 vorgesehen sein.

Das erfindungsgemäße Getriebe kann beispielsweise mit Zusatzelementen ausgestattet sein. Beispiele hierfür sind Druckzylinder für Druckluft oder Hydraulik, Drehzylinder, Gewindespindeln oder Zahnstangen, Stellmotoren, Stoßdämpfer, Federn, Anschläge, Hub- und/oder Kraftbegrenzer, Wegmeßsysteme, Kraftsensoren usw.

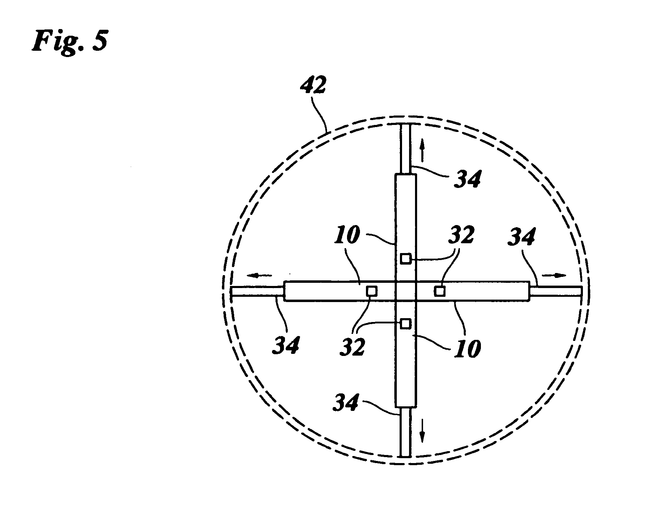

Fig. 5 zeigt eine Anwendung des Getriebes. Fig. 5 zeigt eine Getriebeanordnung mit mehreren erfindungsgemäßen Getrieben, die in einem Kreis um eine Mittelachse, welche parallel zur jeweiligen ersten Schubstange 32 ist, angeordnet sind. Die zweiten Schubstangen 34 zeigen dabei radial nach außen. Es sind beispielsweise vier Getriebe entsprechend der Ausführungsform nach Fig. 1 in einem Kreis um die Mittelachse mit parallelen ersten Schubstangen 32 angeordnet und miteinander fest verbunden. Indem eine Schubkraft, in Fig. 1 senkrecht zur Zeichenebene, auf die ersten Schubstangen 32 ausgeübt wird, erzeugen die zweiten Schubstangen 34 radial nach außen gerichtete Kräfte, mit denen beispielsweise ein Rohr 42 von innen nach außen eingespannt werden kann. Dabei erfolgt automatisch eine Zentrierung der Getriebeanordnung in dem Rohr 42.

## Patentansprüche

1. Getriebe zur Übertragung geradliniger Kräfte, aufweisend:
- wenigstens eine erste Schubstange (32) zur Übertragung geradliniger Kräfte in einer ersten Richtung, welche erste Schubstange (32) ein erstes Antriebs- oder Abtriebselement bildet,
- eine Wippe (12), die dazu eingerichtet ist, eine begrenzte Wippbewegung in einer Ebene auszuführen, wobei die Wippe (12) derart zwangsgeführt ist, daß bei der Wippbewegung ein Führungspunkt (22) der Wippe einen konstanten Abstand von einem getriebefesten Punkt (16) einhält, und
- wenigstens ein zweites Antriebs- oder Abtriebselement (34),
wobei die Wippe (12) eine kreisabschnittsförmige konvexe Außenkontur (20) mit einem Radius R aufweist, mittels derer sie in einer konkaven Fährungskontur (14) geführt ist, die kreisabschnittsförmig mit einem Radius 2R ist,
wobei die Außenkontur (20) der Wippe (12) und die Führungskontur (40) jeweils Zähne (24; 18) aufweisen, die ineinandergreifen,
wobei die erste Schubstange (32) und das zweite Antriebs- oder Abtriebselement (34) jeweils gelenkig mit der Wippe (12) verbunden sind, und
wobei die erste Schubstange (32) an einem ersten Gelenkpunkt (28) mit der Wippe (12) verbunden ist, welcher Gelenkpunkt (28) bei der Wippbewegung der Wippe (12) eine geradlinige Hin- und Herbewegung parallel zu der genannten Ebene ausführt,
**dadurch gekennzeichnet,**
**dass** die erste Schubstange (32) gelenkig mit der Wippe (12) zur Übertragung von Zug- und Druckkräften verbunden ist, und
**dass** die Wippe (12)
- mittels eines Lenkers (26), welcher Lenker (26) um den Führungspunkt (22) schwenkbar ist und um eine durch den getriebefesten Punkt (16) gehenden Achse schwenkbar ist,
oder
- mittels eines Rollelements (36), welches Rollelement drehbar um eine durch den Führungspunkt (22) gehende Achse an der Wippe (12) gelagert ist und an einer Führungskulisse (38) vor dem genannten getriebefesten Punkt (16) abrollt,
zwangsgeführt ist.

2. Getriebe nach Anspruch 1, bei dem eine zweite Schubstange (34) ein zweites Antriebs- oder Abtriebselement bildet, welche zweite Schubstange (34) an einem zweiten, von dem ersten Gelenkpunkt (28) verschiedenen Gelenkpunkt (30) mit der Wippe (12) verbunden ist, der bei der Wippbewegung der Wippe (12) eine geradlinige Hin- und Herbewegung parallel zu der genannten Ebene ausführt.

3. Getriebe nach Anspruch 1 oder 2, bei dem der Lenker (26) eine Kurbel mit einer Kurbelschwinge (40) bildet, deren Achse durch den getriebefesten Punkt (16) geht und senkrecht zur genannten Ebene angeordnet ist.

4. Getriebe nach einem der vorstehenden Ansprüche, bei dem die Wippe (12) derart zwangsgeführt ist, daß, sowohl bei der Übertragung von Zugkräften als auch bei der Übertragung von Druckkräften durch die erste Schubstange (32), bei der Wippbewegung ein Führungspunkt (22) der Wippe einen konstanten Abstand von einem getriebefesten Punkt (16) einhält.

## Claims

1. Gearbox for transmitting linear forces, comprising:
- at least a first push rod (32) for transmitting linear forces in a first direction, which first push rod (32) forms a first drive member or output member,
- a rocker (12), which is arranged to perform a limited rocking motion in a plane, wherein the rocker (12) is forcibly guided such that, during the rocking motion, a guide point (22) of the rocker maintains a constant distance from a point (16) that is fixed relative to the gearbox, and
- at least a second drive member or output member (34),
wherein the rocker (12) comprises a convex outer contour (20) having the shape of a segment of a circle and having a radius R, by which outer contour it is guided in a concave guide contour (14) having the shape of a segment of a circle and having a radius 2R,
wherein the outer contour (20) of the rocker (12) and the guide contour (40) each comprise teeth (24; 18), which are in gear,
wherein the first push rod (32) and the second drive member or output member (34) each are connected to the rocker (12) in an articulated manner, and
wherein the first push rod (32) is connected to the rocker (12) at a first articulation point (28), which articulation point (28) during the rocking motion of the rocker (12) performs a linear back and forth motion parallel to said plane,
**characterized in**
**that** the first push rod (32) is connected to the rocker (12) in an articulated manner for transmitting tractive forces and forces of pressure, and
**that** the rocker (12) is forcibly guided
- by a rod (26), which rod (26) is pivotable about the guide point (22) and is pivotable about an axis through said point (16) that is fixed relative to the gearbox,
or
- by a rolling member (36), which rolling member is arranged at the rocker (12) to be rotatable about an axis through the guide point (22), and which rolls on a guide contour (38) in front of said point (16) that is fixed relative to the gearbox.

2. Gearbox according to claim 1, wherein a second push rod (34) forms a second drive member or output member, which second push rod (34) is connected to the rocker (12) at a second articulation point (30) different from the first articulation point (28), which second articulation point (30) during the rocking motion of the rocker (12) performs a linear back and forth motion parallel to said plane.

3. Gearbox according to claim 1 or 2, wherein the rod (26) forms a crank having a crank-rocker linkage (40), an axis of which runs through said point (16) that is fixed relative to the gear box, and which axis is perpendicular to said plane.

4. Gearbox according to one of the preceding claims, wherein the rocker (12) is forcibly guided such that, during the rocking motion, a guide point (22) of the rocker maintains a constant distance from a point (16) that is fixed relative to the gear box, both during the transmitting of tractive forces and during the transmitting of forces of pressure by the first push rod (32).

## Revendications

1. Engrenage destiné à transmettre des forces linéaires, comportant :
- au moins une première bielle (32) pour transmettre des forces linéaires dans une première direction, laquelle première bielle (32) forme un premier entraînement ou organe d'entraînement,
- un balancier (12) qui est adapté pour exécuter un mouvement de bascule limité dans un plan, dans lequel le balancier (12) est guidé de manière forcée de telle sorte que lors du mouvement de bascule, un point de guidage (22) du balancier conserve une distance constante par rapport à un point (16) fixe par rapport à l'engrenage, et
- au moins un second entraînement ou organe d'entraînement (34),
dans lequel le balancier (12) a un contour extérieur convexe en forme de segment circulaire (20) ayant un rayon R, au moyen duquel il est guidé dans un contour de guidage concave (14) qui est en forme de segment circulaire avec un rayon 2R,
dans lequel le contour extérieur (20) du balancier (12) et le contour de guidage (40) comportent chacun des dents (24 ; 18) qui s'engrènent les unes avec les autres,
dans lequel la première bielle (32) et le second entraînement ou organe d'entraînement (34) sont chacun reliés au balancier (12) de manière articulée, et
dans lequel la première bielle (32) est reliée au balancier (12) en un premier point d'articulation (28), lequel point d'articulation (28) exécute un mouvement de va-et-vient linéaire parallèlement au plan cité lors du mouvement de bascule du balancier (12),
**caractérisé**
**en ce que** la première bielle (32) est reliée au balancier (12) de manière articulée pour transmettre des forces de traction et de compression, et
**en ce que** le balancier (12) est guidé de manière forcée
- au moyen d'un bras oscillant (26), lequel bras oscillant (26) peut pivoter autour du point de guidage (22) et peut pivoter autour d'un axe passant par le point (16) fixe par rapport à l'engrenage,
ou
- au moyen d'un organe de roulement (36), lequel organe de roulement est monté sur le balancier (12) de manière à pouvoir tourner autour d'un axe passant par le point de guidage (22) et roule sur une glissière de guidage (38) avant le point (16) cité fixe par rapport à l'engrenage.

2. Engrenage selon la revendication 1, dans lequel une seconde bielle (34) forme un second entraînement ou organe d'entraînement, laquelle seconde bielle (34) est reliée au balancier (12) en un second point d'articulation (30) différent du premier point d'articulation (28), lequel second point d'articulation exécute un mouvement en va-et-vient linéaire parallèlement au plan cité lors du mouvement de bascule du balancier (12).

3. Engrenage selon la revendication 1 ou 2, dans lequel le bras oscillant (26) forme une manivelle avec un mécanisme à manivelle et bielle oscillante (40), dont l'axe passe par le point (16) fixe par rapport à l'engrenage et est agencé perpendiculairement au plan cité.

4. Engrenage selon l'une quelconque des revendications précédentes, dans lequel le balancier (12) est guidé de manière forcée de telle sorte que lors du mouvement de bascule, un point de guidage (22) du balancier conserve une distance constante par rapport à un point fixe par rapport à l'engrenage aussi bien lors de la transmission de forces de traction que lors de la transmission de forces de compression par l'intermédiaire de la première bielle (32).
